# EUROPÄISCHE PATENTANMELDUNG

(11) **EP 4 241 543 A1**
(43) Veröffentlichungstag der Anmeldung: **13.09.2023**
(21) Anmeldenummer: 23153481.9
(22) Anmeldetag: 26.01.2023
(51) Int. Cl.: A01B 39/02, A01B 63/24

(54) **ARBEITSMASCHINE MIT EINER HACKVORRICHTUNG**

(30) Priorität: 09.03.2022 DE 102022105483
(71) Anmelder: CLAAS E-Systems GmbH, 49201 Dissen (DE)
(72) Erfinder: Lysgaard Andersen, Gert, 3450 Alleroed (DK); Burchardi, Henrik, 2990 Nivaa (DK); Jürschik, Peter, 33335 Gütersloh (DE); Hagedorn, Simon, 49219 Glandorf (DE); Künnen, Tobias, 49479 Ibbenbüren (DE)
(74) Vertreter: CLAAS Gruppe

(57) **Zusammenfassung**

Die vorliegende Erfindung betrifft eine landwirtschaftliche Arbeitsmaschine (1), eine landwirtschaftliche Hackvorrichtung (2) und eine Verfahren zum Betrieb der landwirtschaftlichen Arbeitsmaschine (1) und der landwirtschaftlichen Hackvorrichtung (2).

Die vorliegende Erfindung beruht auf dem allgemeinen Gedanken, dass eine landwirtschaftliche Hackvorrichtung (2) in Abhängigkeit der erkannten Position von Nutzpflanzen angesteuert wird, die ein Kamerasystem (4) erfasst.

## Beschreibung

Die vorliegende Erfindung betrifft eine landwirtschaftliche Arbeitsmaschine, eine landwirtschaftliche Hackvorrichtung und ein Verfahren zum Betrieb der landwirtschaftlichen Arbeitsmaschine und der landwirtschaftlichen Hackvorrichtung.

In der Landwirtschaft werden als Alternative zum Einsatz chemischer Mittel insbesondere landwirtschaftliche Hackvorrichtungen eingesetzt, um Bodenbereiche zwischen Pflanzenreihen aufzubrechen und Unkraut zwischen diesen Pflanzenreihen zu entfernen. Problematisch ist hieran jedoch, dass bei einer falschen Einstellung der Hackvorrichtung die Pflanzenreihen entweder beschädigt werden oder dass der durch die Hackvorrichtungen bearbeitete Bodenbereich kleiner ist als die Querbeabstandung der Pflanzenreihen, sodass die Wirkung der Hackvorrichtungen vernachlässigbar klein ist und in einem solchen Fall zu einem unnötigen Kraftstoffverbrauch führt.

Der vorliegenden Erfindung liegt die Aufgabe zugrunde, eine verbesserte oder zumindest eine alternative Ausführungsform einer landwirtschaftlichen Arbeitsmaschine, einer landwirtschaftlichen Hackvorrichtung und/oder eines Verfahren zum Betrieb dieser anzugeben, wobei insbesondere eine ausreichende Bearbeitungsgenauigkeit beim Durchfahren eines Feldbestands mit der Hackvorrichtung ohne eine Beschädigung der Pflanzenreihen bereitgestellt wird.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass eine landwirtschaftliche Hackvorrichtung in Abhängigkeit der erkannten Position von Nutzpflanzen angesteuert wird, die ein Kamerasystem erfasst hat.

Die erfindungsgemäße landwirtschaftliche Arbeitsmaschine, die insbesondere als Traktor ausgebildet sein kann, weist wenigstens eine landwirtschaftliche Hackvorrichtung zur Bearbeitung eines Feldbestandes auf. Ferner weist die landwirtschaftliche Arbeitsmaschine wenigstens ein Kamerasystem zur Erfassung von Nutzpflanzenpositionen des Feldbestandes auf. Dieses Kamerasystem kann wenigstens eine Kamera und eine Kameraauswertungsvorrichtung umfassen. Die wenigstens eine Kamera kann derart ausgebildet und/oder programmiert sein, dass der Feldbestand, also insbesondere die Pflanzenreihen aus Nutzpflanzen als auch dazwischen ausgebildete Bodenbereiche, erfasst und an die Kameraauswertungsvorrichtung übermittelt wird. Die Kameraauswertungsvorrichtung kann derart ausgebildet und/oder programmiert sein, dass basierend auf den von der wenigstens einen Kamera übermittelten Daten entsprechende Informationen bezüglich des Feldbestandes erkannt und/oder generiert werden. Diese bezüglich des Feldbestandes erkannten und/oder generierten Informationen können beispielsweise Informationen bezüglich der Breite, der Höhe und/oder Tiefe von Nutzpflanzen und/oder zwischen Nutzpflanzen des Feldbestandes aufweisen. Die bezüglich des Feldbestandes generierten Informationen können zusätzlich oder alternativ beispielsweise Informationen bezüglich der Breite von Pflanzenreihen und/oder Querabstände zwischen den Pflanzenreihen umfassen.

Die wenigstens eine Kamera und die Kameraauswertungsvorrichtung können kommunizierend miteinander verbunden sein. Unter einer kommunizierenden Verbindung kann hier als auch nachfolgend zu verstehen sein, dass zwischen zwei miteinander kommunizierend verbundenen Komponenten eine Datenverbindung, insbesondere eine bidirektionale oder unidirektionale Datenverbindung, ausgebildet ist, mit der elektrische Signale, insbesondere Steuersignale und/oder Regelsignale und/oder Messsignale, in analoger Form und/oder digitaler Form übertragbar sind.

Die landwirtschaftliche Arbeitsmaschine ist dazu ausgebildet und/oder programmiert, die landwirtschaftliche Hackvorrichtung in Abhängigkeit der erfassten Nutzpflanzenpositionen, insbesondere der darauf basierenden vom Kamerasystem generierten Informationen, , anzusteuern, insbesondere automatisiert anzusteuern. Mittels dieser, insbesondere automatisierten, Ansteuerung der landwirtschaftlichen Hackvorrichtung wird erzielt, dass eine ausreichende Bearbeitungsgenauigkeit beim Durchfahren eines Feldbestands mit der Hackvorrichtung ohne eine Beschädigung der Pflanzenreihen bereitgestellt wird. Ferner wird hierdurch der Fahrer der landwirtschaftlichen Arbeitsmaschine entlastet, da beispielsweise der Querabstand zwischen den Pflanzenreihen nicht nur auf unterschiedlichen Feldern unterschiedlich ausgebildet sein kann, sondern aufgrund des Wachstumsverhaltens der Pflanzenreihen innerhalb eines Feldes auftreten kann. Neben der Entlastung des Fahrers der landwirtschaftlichen Arbeitsmaschine wird daher ein optimaler Einsatz einer Hackvorrichtung ermöglicht.

Bei einer vorteilhaften Weiterbildung der erfindungsgemäßen Lösung ist vorgesehen, dass die landwirtschaftliche Hackvorrichtung wenigstens eine bezüglich einer Querbreite ansteuerbare Hackeinheit zur Bearbeitung eines Bodenbereiches zwischen zwei bezüglich eines Querabstandes voneinander beabstandet angeordneten Pflanzenreihen des Feldbestandes aufweist. Diese Hackvorrichtung kann mehrere voneinander beabstandete Hackeinheiten aufweisen, wobei eine solche Hackeinheit beispielsweise mehrere voneinander beabstandete Hackelemente aufweisen kann. Diese Hackelemente können beispielsweise als Gänsefußschare ausgebildet sein. Die landwirtschaftliche Hackvorrichtung kann zur elektrischen, hydraulischen oder/und pneumatischen Ansteuerung der Hackeinheit ausgebildet sein. Insbesondere kann bei einer solchen Ansteuerung der Hackeinheit die Beabstandung der Hackelemente derart angesteuert werden, dass eine vorgegebene Querbreite, die insbesondere nicht größer als der Querabstand der Pflanzenreihen ist, durch die angesteuerte Hackeinheit ausgebildet wird.

Die landwirtschaftliche Arbeitsmaschine weist eine Steuervorrichtung zur Ansteuerung der Querbreite der wenigstens einen ansteuerbaren Hackeinheit der Hackvorrichtung auf. Das Kamerasystem ist dazu ausgebildet und/oder programmiert, basierend auf den erfassten Nutzpflanzenpositionen, insbesondere auf den generierten Informationen, einen Querabstandswert, der den Querabstand zwischen den zwei voneinander beabstandet angeordneten Pflanzenreihen betrifft, zu bestimmen und an die Steuervorrichtung zu übermitteln, wobei die Steuervorrichtung dazu ausgebildet und/oder programmiert ist, die Querbreite der wenigstens einen ansteuerbaren Hackeinheit in Abhängigkeit des vom Kamerasystem übermittelten Querabstandswertes anzusteuern. Die Steuervorrichtung und die Hackvorrichtung, insbesondere die ansteuerbare Hackeinheit, können kommunizierend miteinander verbunden sein. Die Steuervorrichtung kann die Hackvorrichtung, insbesondere die ansteuerbare Hackeinheit, mittels eines elektrischen, hydraulischen oder/und pneumatischen Steuersignals ansteuern.

Die landwirtschaftliche Arbeitsmaschine kann in eine Fahrtrichtung fahren, wobei eine Querrichtung quer und/oder senkrecht zu dieser Fahrtrichtung ausgerichtet ist. Die Querbreite einer ansteuerbaren Hackeinheit als auch der Querabstand der Pflanzenreihen können sich jeweils auf diese Querrichtung beziehen.

Bei einer vorteilhaften Weiterbildung der erfindungsgemäßen Lösung ist vorgesehen, dass die Hackvorrichtung wenigstens eine Messvorrichtung zur Erfassung der Querbreite der wenigstens einen ansteuerbaren Hackeinheit aufweist. Die Hackvorrichtung kann eine Messvorrichtung aufweisen, die die Querbreiten mehrere ansteuerbarer Hackeinheiten ermitteln kann. Ferner ist die Messvorrichtung dazu ausgebildet und/oder programmiert, einen Querbreitenwert, der die eingestellte Querbreite der ansteuerbaren Hackeinheit betrifft, zu bestimmen und an die Steuervorrichtung zu übermitteln, wobei die Steuervorrichtung dazu ausgebildet und/oder programmiert ist, die Querbreite der wenigstens einen ansteuerbaren Hackeinheit in Abhängigkeit des vom Kamerasystem übermittelten Querabstandswertes anzusteuern, falls der Querabstandswert ungleich dem von der Messvorrichtung übermittelten Querbreitenwert ist. Mit anderen Worten ausgedrückt, vergleicht die Steuervorrichtung den von dem Kamerasystem übermittelten Querabstandswert kontinuierlich, insbesondere kontinuierlich widerholend bzw. regelmäßig, mit dem von der Messvorrichtung übermittelten Querbreitenwert verglichen wird und im Falle einer Abweichung eine Ansteuerung der Querbreiten der wenigstens einen ansteuerbaren Hackeinheit erfolgt. Die Steuervorrichtung und die Messvorrichtung zur Erfassung der Querbreite können kommunizierend miteinander verbunden sein.

Bei einer vorteilhaften Weiterbildung der erfindungsgemäßen Lösung ist vorgesehen, dass das Kamerasystem wenigstens eine 3D-Kamera aufweist. Die 3D-Kamera kann den Feldbestand insbesondere vor der landwirtschaftlichen Arbeitsmaschine erfassen. Zu diesem Zweck kann die 3D-Kamera zwei Kameraobjektive aufweisen, über die die Aufnahme stereoskopischer Bildpaare entlang zweier verschiedener Blickachsen möglich ist. Die beiden Blickachsen gehen dabei jeweils von dem optischen Zentrum des jeweiligen Kameraobjektivs aus und erstrecken sich jeweils in eine Blickrichtung. Alternativ oder zusätzlich kann die 3D-Kamera ein einzelnes Kameraobjektiv und einen die Bildpaare erzeugenden optischen Aufsatz aufweisen. Mit einer 3D-Kamera kann die Bearbeitungsgenauigkeit beim Durchfahren eines Feldbestands mit dem landwirtschaftlichen Arbeitsaggregat erhöht werden.

Bei einer vorteilhaften Weiterbildung der erfindungsgemäßen Lösung ist vorgesehen, dass die landwirtschaftliche Arbeitsmaschine eine Fahrgeschwindigkeitsmessvorrichtung zur Messung der Fahrgeschwindigkeit der landwirtschaftlichen Arbeitsmaschine aufweist. Die Fahrgeschwindigkeitsmessvorrichtung ist dazu ausgebildet und/oder programmiert, einen Fahrgeschwindigkeitswert, der der Fahrgeschwindigkeit der landwirtschaftliche Arbeitsmaschine entspricht, zu bestimmen und an die Steuervorrichtung zu übermitteln.

Die Steuervorrichtung ist dazu ausgebildet und/oder programmiert, die Querbreite der wenigstens einen ansteuerbaren Hackeinheit zusätzlich oder alternativ in Abhängigkeit des Fahrgeschwindigkeitswertes anzusteuern. Bei der Verwendung der landwirtschaftlichen Hackvorrichtung hat beispielsweise auch die Fahrgeschwindigkeit der landwirtschaftlichen Arbeitsmaschine einen Einfluss darauf, wieviel Material des Bodenbereiches in die Pflanzenreihen aufgrund der Bearbeitung mittels der Hackvorrichtung geschleudert wird. Die Steuervorrichtung kann daher dazu ausgebildet und/oder programmiert sein, die Querbreite der wenigstens einen ansteuerbaren Hackeinheit in Abhängigkeit des Fahrgeschwindigkeitswertes derart anzusteuern, das reduziert oder insbesondere vermieden wird, dass Material des Bodenbereiches in die Pflanzenreihen aufgrund der Bearbeitung mittels der Hackvorrichtung geschleudert wird. Die Steuervorrichtung und die Fahrgeschwindigkeitsmessvorrichtung können kommunizierend miteinander verbunden sein.

Bei einer vorteilhaften Weiterbildung der erfindungsgemäßen Lösung ist vorgesehen, dass das Kamerasystem dazu ausgebildet und/oder programmiert ist, einen Qualitätswert, der einer Qualität der erfassten Nutzpflanzenpositionen entspricht, zu bestimmen und an die Steuervorrichtung zu übermitteln. Die Steuervorrichtung ist dazu ausgebildet und/oder programmiert, die Querbreite der wenigstens einen ansteuerbaren Hackeinheit zusätzlich oder alternativ in Abhängigkeit des vom Kamerasystem übermittelten Qualitätswert anzusteuern. Beispielsweise kann die Qualität bei der Erfassung der Nutzpflanzenpositionen aufgrund der Wetterlage und/oder beispielsweise der Abenddämmerung reduziert sein, sodass die Steuervorrichtung beispielsweise für die Sicherheit der Pflanzenreihen die Querbreite der wenigstens einen ansteuerbaren Hackeinheit kleiner einstellt als für den Fall, in dem die Qualität der erfassten Nutzpflanzenpositionen optimal ist.

Bei einer vorteilhaften Weiterbildung der erfindungsgemäßen Lösung ist vorgesehen, dass die landwirtschaftliche Hackvorrichtung als Anbaugerät ausgebildet ist. Das Anbaugerät kann dergestalt ausgebildet sein, dass es im Frontbereich eines Traktors und/oder auch im hinteren Bereich eines Traktors angebracht werden kann.

Bei einer vorteilhaften Weiterbildung der erfindungsgemäßen Lösung ist vorgesehen, dass das Kamerasystem an der landwirtschaftlichen Arbeitsmaschine und/oder an der landwirtschaftlichen Hackvorrichtung angeordnet ist. Das Kamerasystem kann derart an der landwirtschaftlichen Arbeitsmaschine und/oder an der landwirtschaftlichen Hackvorrichtung angeordnet sein, dass das Kamerasystem den Feldbestand in Fahrtrichtung erfassen kann. Ferner betrifft die Erfindung eine landwirtschaftliche Hackvorrichtung der oben angeführten landwirtschaftlichen Arbeitsmaschine.

Ferner betrifft die Erfindung ein Verfahren, insbesondere ein computergestütztes Verfahren, zum Betrieb der oben angeführten landwirtschaftlichen Arbeitsmaschine und/oder der oben angeführten landwirtschaftlichen Hackvorrichtung, wobei das Kamerasystem bei der Erfassung der Nutzpflanzenpositionen, insbesondere Informationen bezüglich eines Feldbestandes, generiert und die landwirtschaftliche Hackvorrichtung, insbesondere die ansteuerbare Hackeinheit bezüglich ihrer Querbreite, in Abhängigkeit der vom Kamerasystem erfassten Nutzpflanzenpositionen angesteuert wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: exemplarisch eine erfindungsgemäße landwirtschaftliche Arbeitsmaschine,
- Fig. 2: eine erste Draufsicht auf die landwirtschaftliche Arbeitsmaschine der Fig. 1,
- Fig. 3: die Hackvorrichtung während des Zustandes der Fig. 2,
- Fig. 4: eine zweite Draufsicht auf die landwirtschaftliche Arbeitsmaschine der Fig. 1,
- Fig. 5: die Hackvorrichtung während des Zustandes der Fig. 4,

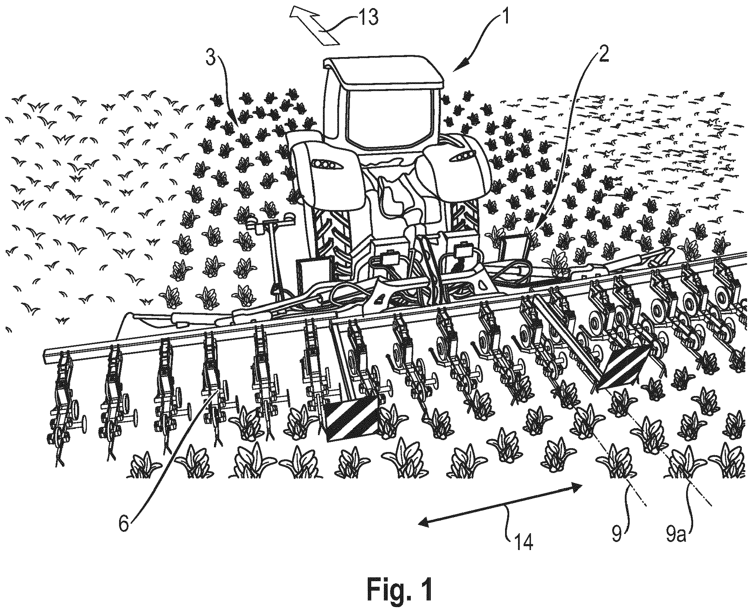

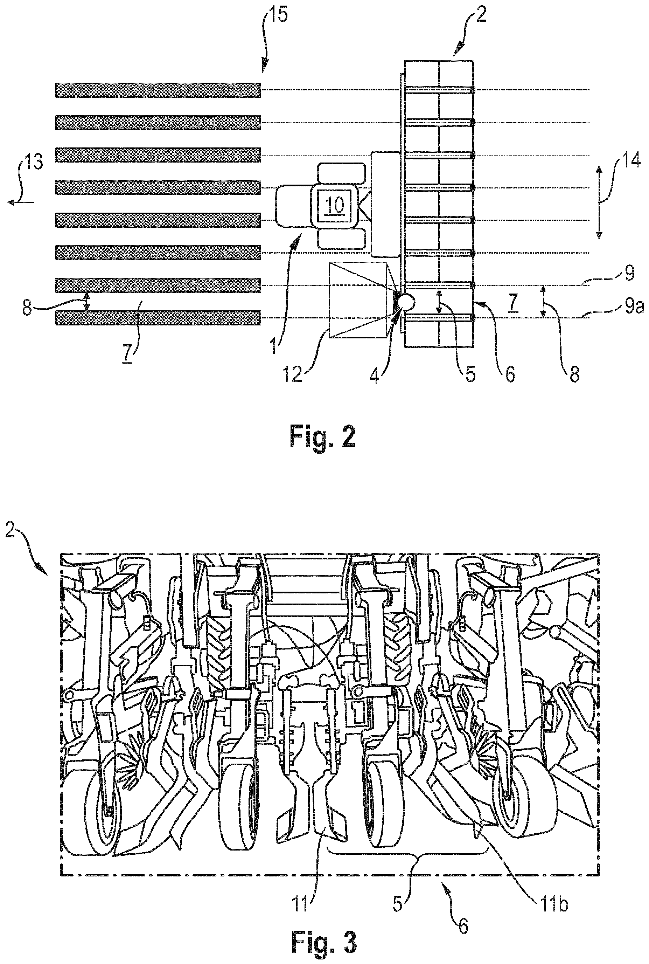

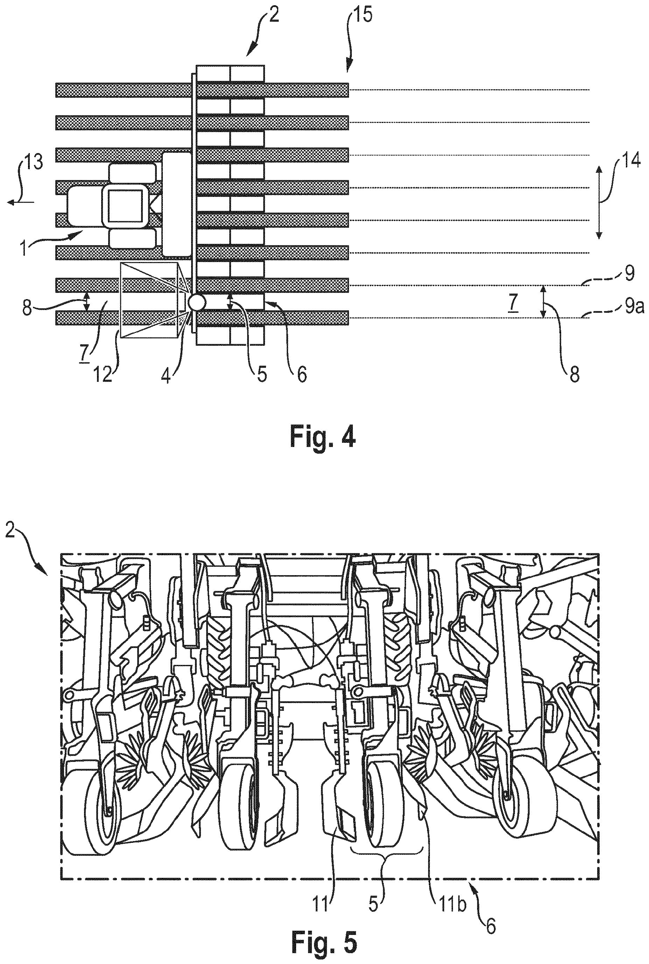

Die Fig. 1 zeigt eine landwirtschaftliche Arbeitsmaschine 1 in Form eines Traktors mit einer landwirtschaftlichen Hackvorrichtung 2 zur Bearbeitung eines Feldbestandes 3, wobei die Hackvorrichtung 2 als Anbaugerät ausgebildet ist. Der Feldbestandes 3 umfasst mehrere Pflanzenreihen 9 und 9a, die bezüglich eines Querabstandes 8, der in den Fig. 2 und Fig. 4 angedeutet ist, voneinander beabstandet angeordnet sind. Die landwirtschaftliche Arbeitsmaschine 1 fährt beispielsweise entlang einer Fahrtrichtung 13, um mittels der Hackvorrichtung 2 die Bodenbereiche 7 zwischen den Pflanzenreihen 9 und 9a aufzubrechen und Unkraut zwischen diesen Pflanzenreihen 9 und 9a zu entfernen. Die landwirtschaftliche Arbeitsmaschine 1 weist wenigstens ein Kamerasystem 4 zur Erfassung von Nutzpflanzenpositionen des Feldbestandes 3 auf. Die landwirtschaftliche Arbeitsmaschine 1 ist dazu ausgebildet und/oder programmiert, die landwirtschaftliche Hackvorrichtung 2 in Abhängigkeit der vom Kamerasystem 4 erfassten Nutzpflanzenpositionen automatisiert anzusteuern. Hierfür kann die landwirtschaftliche Arbeitsmaschine 1 eine Steuervorrichtung 10 zur Steuerung und/oder Regelung der landwirtschaftlichen Hackvorrichtung 2 aufweisen, die am Traktor ausgebildet sein kann.

Die landwirtschaftliche Hackvorrichtung 2 weist mehrere bezüglich einer Querrichtung 14 voneinander beabstandete Hackeinheiten 6 auf, wobei die Querrichtung 14 im Wesentlichen quer und/oder senkrecht zur Fahrtrichtung 13 ausgerichtet ist. Eine solche Hackeinheit 6 weist eine Querbreite 5 auf, die im Wesentlichen parallel zur Querrichtung 14 ermittelbar ist.

Die Fig. 3 und Fig. 5 zeigen detailliert diese Hackeinheiten 6, wobei eine solche Hackeinheit 6 mehrere voneinander beabstandete Hackelemente 11 und 11b aufweist. Diese Hackelemente 11 und 11b können beispielsweise als Gänsefußschare ausgebildet sein. Eine solche Hackeinheit 6 ist bezüglich der Querbreite 5 ansteuerbar, um eine Bearbeitung eines Bodenbereiches 7 zwischen den zwei bezüglich des Querabstandes 8 voneinander beabstandet angeordneten Pflanzenreihen 9 und 9a des Feldbestandes 3 zu ermöglichen. Die landwirtschaftliche Hackvorrichtung 2 ist zur elektrischen, hydraulischen oder/und pneumatischen Ansteuerung der Hackeinheiten 6 ausgebildet.

In den Fig. 2 und Fig. 4 ist ein Reihenänderungsbereich 15 angedeutet. In der Fig. 2 ist die landwirtschaftliche Arbeitsmaschine in einem Bereich, in dem der Querabstand 8 der Pflanzenreihen 9 und 9a größer ist als in dem Bereich, in dem die landwirtschaftliche Arbeitsmaschine gemäß der Fig. 4 ist. Diese Veränderung des Querabstandes 8 liegt beispielsweise daran, dass die Pflanzenreihen 9 und 9a in einem Bereich aufgrund von Umweltbedingungen unterschiedliche Breiten ausbilden.

Das Kamerasystem 4 hat einen optischen Erfassungsbereich 12 und ist dazu ausgebildet und/oder programmiert, basierend auf den erfassten Nutzpflanzenpositionen einen Querabstandswert, der den Querabstand zwischen den zwei voneinander beabstandet angeordneten Pflanzenreihen 9 und 9a betrifft, zu bestimmen und an die Steuervorrichtung 10 zu übermitteln. Die Steuervorrichtung 10 ist dazu ausgebildet und/oder programmiert, die Querbreite 5 der ansteuerbaren Hackeinheit 6 in Abhängigkeit des vom Kamerasystem 4 übermittelten Querabstandswertes anzusteuern. Der Effekt dieser Ansteuerung ist beispielhaft in den Fig. 3 und Fig. 5 angedeutet. In der Fig. 3 weisen die Hackelemente 11 und 11b eine größere zulässige Querbreite 5 als in der Fig. 5 auf.

### Bezugszeichenliste

- 1: Landwirtschaftliches Arbeitsmaschine
- 2: Hackvorrichtung
- 3: Feldbestandes
- 4: Kamerasystem
- 5: Querbreite
- 6: Hackeinheit
- 7: Bodenbereich
- 8: Querabstand
- 9: Pflanzenreihen
- 9a: Pflanzenreihen
- 10: Steuervorrichtung
- 11: Hackelement
- 11b: Hackelement
- 12: optischer Erfassungsbereich
- 13: Fahrtrichtung
- 14: Querrichtung
- 15: Reihenbreitenänderung

## Patentansprüche

1. Landwirtschaftliche Arbeitsmaschine (1)
- mit wenigstens einer landwirtschaftlichen Hackvorrichtung (2) zur Bearbeitung eines Feldbestandes (3),
- mit wenigstens einem Kamerasystem (4) zur Erfassung von Nutzpflanzenpositionen eines Feldbestandes (3),
**dadurch gekennzeichnet,**
**dass** die landwirtschaftliche Arbeitsmaschine (1) dazu ausgebildet und/oder programmiert ist, die landwirtschaftliche Hackvorrichtung (2) in Abhängigkeit der vom Kamerasystem (4) erfassten Nutzpflanzenpositionen anzusteuern.

2. Landwirtschaftliche Arbeitsmaschine (1) nach Anspruch 1,
**dadurch gekennzeichnet,**
- **dass** die landwirtschaftliche Hackvorrichtung (2) wenigstens eine bezüglich einer Querbreite (5) ansteuerbare Hackeinheit (6) zur Bearbeitung eines Bodenbereiches (7) zwischen zwei bezüglich eines Querabstandes (8) voneinander beabstandet angeordneten Pflanzenreihen (9, 9a) des Feldbestandes (3) aufweist,
- **dass** die landwirtschaftliche Arbeitsmaschine (1) eine Steuervorrichtung (10) zur Ansteuerung der Querbreite (5) der wenigstens einen ansteuerbaren Hackeinheit (6) der Hackvorrichtung (2) aufweist,
- wobei das Kamerasystem (4) dazu ausgebildet und/oder programmiert ist, basierend auf den erfassten Nutzpflanzenpositionen einen Querabstandswert, der den Querabstand zwischen den zwei voneinander beabstandet angeordneten Pflanzenreihen (9, 9a) betrifft, zu bestimmen und an die Steuervorrichtung (10) zu übermitteln,
- wobei die Steuervorrichtung (10) dazu ausgebildet und/oder programmiert ist, die Querbreite (5) der wenigstens einen ansteuerbaren Hackeinheit (6) in Abhängigkeit des vom dem Kamerasystem (4) übermittelten Querabstandswertes anzusteuern.

3. Landwirtschaftliche Arbeitsmaschine (1) nach Anspruch 1 oder 2,
**dadurch gekennzeichnet,**
- **dass** die Hackvorrichtung (2) wenigstens eine Messvorrichtung zur Erfassung der Querbreite (5) der wenigstens einen ansteuerbaren Hackeinheit (6) aufweist,
- wobei die Messvorrichtung dazu ausgebildet und/oder programmiert ist, einen Querbreitenwert, der die eingestellte Querbreite (5) der ansteuerbaren Hackeinheit (6) betrifft, zu bestimmen und an die Steuervorrichtung (10) zu übermitteln,
- wobei die Steuervorrichtung (10) dazu ausgebildet und/oder programmiert ist, die Querbreite (5) der wenigstens einen ansteuerbaren Hackeinheit (6) in Abhängigkeit des vom dem Kamerasystem (4) übermittelten Querabstandswertes anzusteuern, falls der Querabstandswert ungleich dem von der Messvorrichtung übermittelten Querbreitenwert ist.

4. Landwirtschaftliche Arbeitsmaschine (1) nach einem der vorangehenden Ansprüche,
**dadurch gekennzeichnet**,
das Kamerasystem (4) wenigstens eine 3D-Kamera aufweist.

5. Landwirtschaftliche Arbeitsmaschine (1) nach Anspruch 4,
**dadurch gekennzeichnet,**
- **dass** die 3D-Kamera zwei Kameraobjektive aufweist, oder
- **dass** die 3D-Kamera ein einzelnes Kameraobjektiv und einen die Bildpaare erzeugenden optischen Aufsatz aufweist.

6. Landwirtschaftliche Arbeitsmaschine (1) nach einem der Ansprüche 2 bis 5,
**dadurch gekennzeichnet,**
- **dass** die landwirtschaftliche Arbeitsmaschine (1) eine Fahrgeschwindigkeitsmessvorrichtung zur Messung der Fahrgeschwindigkeit der landwirtschaftlichen Arbeitsmaschine (1) aufweist, die dazu ausgebildet und/oder programmiert ist, einen Fahrgeschwindigkeitswert, der der Fahrgeschwindigkeit der landwirtschaftliche Arbeitsmaschine (1) entspricht, zu bestimmen und an die Steuervorrichtung (10) zu übermitteln,
- wobei die Steuervorrichtung (10) dazu ausgebildet und/oder programmiert ist, die Querbreite (5) der wenigstens einen ansteuerbaren Hackeinheit (6) zusätzlich oder alternativ in Abhängigkeit des Fahrgeschwindigkeitswertes anzusteuern.

7. Landwirtschaftliche Arbeitsmaschine (1) nach einem der Ansprüche 2 bis 6,
**dadurch gekennzeichnet,**
- **dass** das Kamerasystem (4) dazu ausgebildet und/oder programmiert ist, einen Qualitätswert, der einer Qualität der erfassten Nutzpflanzenpositionen entspricht, zu bestimmen und an die Steuervorrichtung (10) zu übermitteln,
- wobei die Steuervorrichtung (10) dazu ausgebildet und/oder programmiert ist, die Querbreite (5) der wenigstens einen ansteuerbaren Hackeinheit (6) zusätzlich oder alternativ in Abhängigkeit des vom dem Kamerasystem (4) übermittelten Qualitätswertes anzusteuern.

8. Landwirtschaftliche Arbeitsmaschine (1) nach einem der vorangehenden Ansprüche,
**dadurch gekennzeichnet,**
**dass** die landwirtschaftlichen Hackvorrichtung (2) als Anbaugerät ausgebildet ist.

9. Landwirtschaftliche Arbeitsmaschine (1) nach einem der vorangehenden Ansprüche,
**dadurch gekennzeichnet,**
**dass** das Kamerasystem (4) an der landwirtschaftlichen Arbeitsmaschine (1) und/oder an landwirtschaftlichen Hackvorrichtung (2) angeordnet ist.

10. Landwirtschaftliche Hackvorrichtung (2) einer landwirtschaftliche Arbeitsmaschine (1) nach einem der vorangehenden Ansprüche.

11. Verfahren zum Betrieb einer landwirtschaftliche Arbeitsmaschine (1) nach einem der vorangehenden Ansprüche oder einer landwirtschaftlichen Hackvorrichtung (2) nach Anspruch 10,
**dadurch gekennzeichnet,**
**dass** das Kamerasystem (4) Nutzpflanzenpositionen eines Feldbestandes (3)erfasst, wobei die landwirtschaftlichen Hackvorrichtung (2) in Abhängigkeit der vom Kamerasystem (4) erfassten Nutzpflanzenpositionen angesteuert wird.
